# EUROPEAN PATENT APPLICATION

(11) **EP 2 947 874 A1**
(43) Date of publication of application: **25.11.2015**
(21) Application number: 15001564.2
(22) Date of filing: 22.05.2015
(51) Int. Cl.: H04N 13/02, H04N 5/235, B60R 11/04, H04N 13/00

(54) **STEREO CAMERA AND DRIVER ASSISTANCE APPARATUS AND VEHICLE INCLUDING THE SAME**

(30) Priority: 23.05.2014 KR 20140062371
(71) Applicant: LG Electronics Inc., Yeongdeungpo-gu Seoul 150-721 (KR)
(72) Inventor: HAN, Jongwoo, Seoul 137-893 (KR); PARK, Subirm, Seoul 137-893 (KR)
(74) Representative: Beyer, Andreas

(57) **Abstract**

A stereo camera and a driver assistance apparatus and a vehicle including the same are disclosed. The stereo camera includes a first image sensor to sense an image corresponding to at least one exposure time, a second image sensor to sense images corresponding to a plurality of exposure times, and a processor to generate a disparity map and an RGB image based on the images acquired by the first and second image sensors. Consequently, it is possible to acquire the disparity map and the RGB image.

## Description

### CROSS-REFERENCE TO RELATED APPLICATION

This application claims priority under 35 U.S.C. §119 to Korean Patent Application No. 10-2014-0062371, filed on May 23, 2014, whose entire disclosure is hereby incorporated by reference.

### BACKGROUND

### 1. Field

The present disclosure relates to a stereo camera and a driver assistance apparatus and a vehicle including the same and, more particularly, to a stereo camera that is capable of acquiring a disparity map and an RGB image and a driver assistance apparatus and a vehicle including the same.

### 2. Background

A vehicle is a device that allows a driver to move in a desired direction. A representative example of the vehicle may be a car.

In order to improve convenience of a user who uses the vehicle, the vehicle has been equipped with various sensors and electronic devices. In particular, various devices to improve driving convenience of the user have been developed.

During travel of the vehicle, it is typically necessary for a driver to safely control the vehicle in order to prevent an accident. However, it is often difficult for the driver to safely control the vehicle under various travel conditions. Particularly, if the driver does not rapidly recognize an object ahead of the vehicle when the vehicle is travelling at high speed, a severe accident may be caused. On the other hand, it may be difficult for the driver to avoid an obstacle which abruptly appears even when the vehicle is travelling at low speeds. Efforts have been made to solve the above problems and to manufacture safer vehicles. A representative example of the efforts is an obstacle detection method using an image.

A two-dimensional (2D) camera technology that detects the shape of an object using one image in order to safely control the vehicle is used as an example of the obstacle detection method using the image. In this technology, however, it is difficult to accurately acquire information regarding the distance to the object. As a result, it is difficult to utilize the above technology for safe control of the vehicle during travel of the vehicle at high speed.

### SUMMARY OF THE INVENTION

It is an object of the present disclosure to provide a stereo camera that is capable of acquiring a disparity map and an RGB image and a driver assistance apparatus and a vehicle including the same.

In accordance with an aspect of the present disclosure, the above and other objects can be accomplished by the provision of a stereo camera including a first image sensor to sense an image corresponding to at least one exposure time, a second image sensor to sense images corresponding to a plurality of exposure times, and a processor to generate a disparity map and an RGB image based on the images acquired by the first and second image sensors.

In accordance with another aspect of the present disclosure, there is provided a vehicle including a sensor unit to sense a state of the vehicle, a steering drive unit to drive a steering apparatus, a brake drive unit to drive a brake apparatus, a power source drive unit to drive a power source, a suspension drive unit to drive a suspension apparatus, a first image sensor to sense an image corresponding to at least one exposure time, a second image sensor to sense images corresponding to a plurality of exposure times, a processor to generate a disparity map and an RGB image based on the images acquired by the first and second image sensors, and a controller to generate a control signal to control at least one selected from among the steering drive unit, the brake drive unit, the power source drive unit, and the suspension drive unit in the vehicle based on the disparity map and the RGB image.

### BRIEF DESCRIPTION OF THE DRAWINGS

The embodiments will be described in detail with reference to the following drawings in which like reference numerals refer to like elements wherein:
Figure 1 is a view showing the external appearance of a vehicle having a stereo camera according to an embodiment of the present disclosure;
Figure 2 is a view showing the external appearance of the stereo camera attached to the vehicle shown in Figure 1;
Figures 3A and 3B are internal block diagrams showing various examples of a driver assistance apparatus according to an embodiment of the present disclosure;
Figures 4A and 4B are internal block diagrams showing various examples of a processor shown in Figures 3A and 3B;
Figures 5A and 5B are reference views illustrating operations of the processors shown in Figures 4A and 4B;
Figures 6A and 6B are reference views illustrating operations of the driver assistance apparatuses shown in Figure 3A and 3B;
Figure is an internal block diagram showing an example of an electronic control apparatus in the vehicle shown in Figure 1;
Figures 8A and 8B are internal block diagrams showing various examples of the stereo camera shown in Figure 2;
Figures 9A to 9D and 10 are reference views illustrating an operation of the stereo camera shown in Figure 8A or 8B; and
Figure 11A to 18C are reference views illustrating an operation of an image processor shown in Figures 8A or 8B.

### DETAILED DESCRIPTION

Exemplary embodiments of the present disclosure will be described with reference to the attached drawings.

The terms "module" and "unit," when attached to the names of components are used herein to help the understanding of the components and thus they should not be considered as having specific meanings or roles. Accordingly, the terms "module" and "unit" may be used interchangeably.

A vehicle as described in this specification may include a car and a motorcycle. Hereinafter, a description will be given based on a car.

On the other hand, a vehicle as described in this specification may include a vehicle having an engine, a hybrid vehicle having an engine and an electric motor, an electric vehicle having an electric motor, and the like. Hereinafter, a description will be given based on a vehicle having an engine.

A driver assistance apparatus as described in this specification may be an advanced driver assistance system (ADAS) or an advanced driver assistance apparatus (ADAA). Hereinafter, a description will be given of various embodiments of a driver assistance apparatus according to the present disclosure and a vehicle including the same.

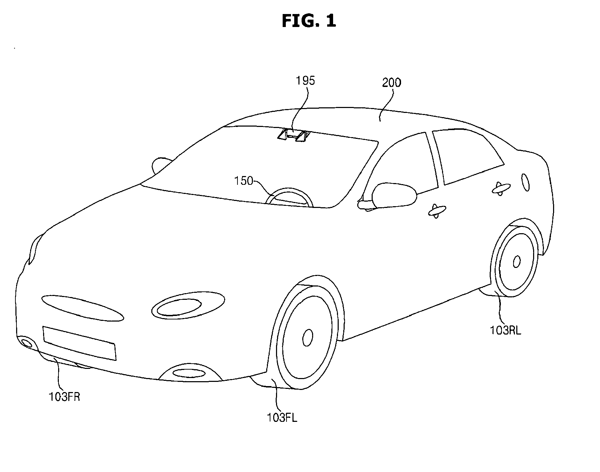

Figure 1 shows the external appearance of a vehicle having a stereo camera according to an embodiment of the present disclosure.

Referring to Figure 1, a vehicle 200 may include wheels 103FR, 103FL, 103RL, and the like, a steering wheel 150, and a stereo camera 195 provided in the vehicle 200.

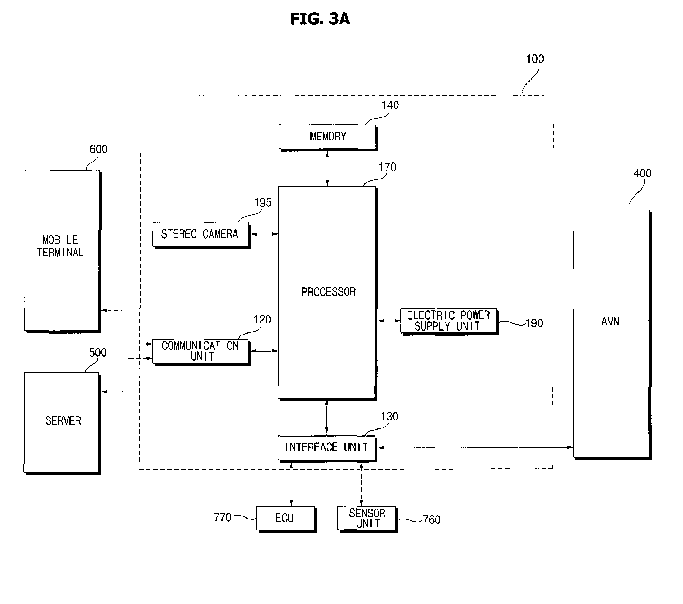

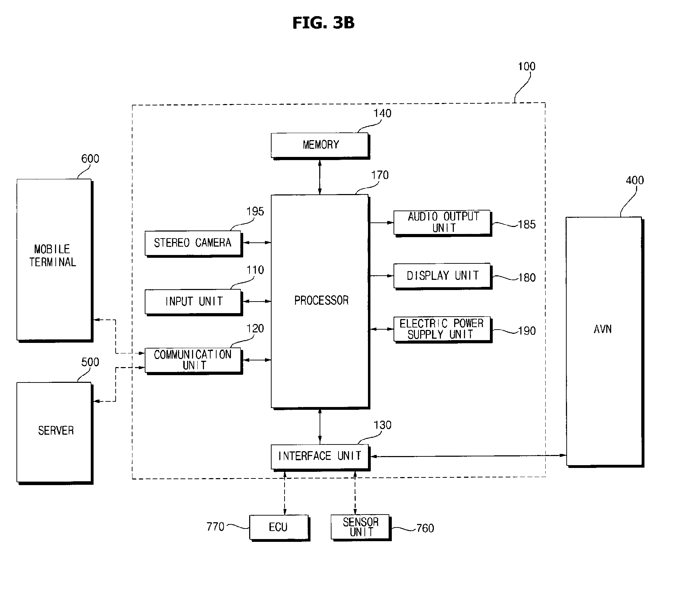

The stereo camera 195 may include a plurality of cameras. Stereo images acquired by the cameras may be signal-processed in a driver assistance apparatus 100 (*see* Figure 3).

BY way of example, Figure 1 shows that the stereo camera 195 may include two cameras.

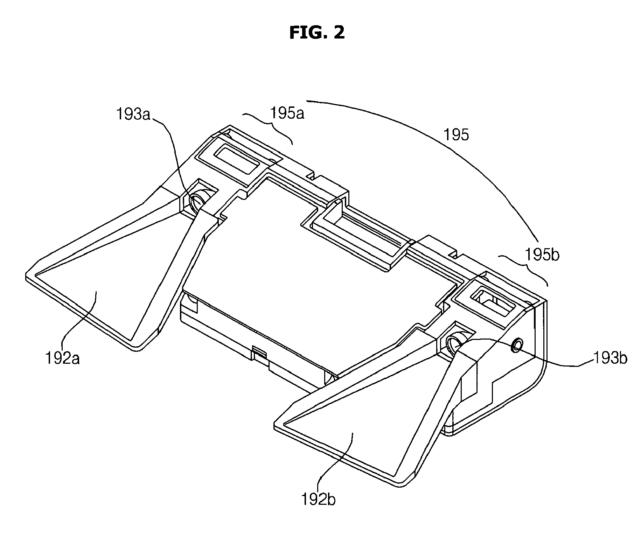

Figure 2 shows the external appearance of the stereo camera attached to the vehicle shown in Figure 1.

Referring to Figure 2, the stereo camera 195 may include a first camera 195a having a first lens 193a and a second camera 195b having a second lens 193b.

In addition, the stereo camera 195 may further include a first light shield unit 192a to shield light falling incident upon the first lens 193a and a second light shield unit 192b to shield light falling incident upon the second lens 193b.

The stereo camera 195 shown in Figure 2 may be detachably attached to a ceiling or a front windshield glass of the vehicle 200.

The driver assistance apparatus 100 (see Figure 3) having the stereo camera 195 may acquire stereo images for a view forward or ahead of the vehicle from the stereo camera 195, detect a disparity based on the stereo images, detect an object for at least one of the stereo images based on disparity information, and continuously track motion of the object after detection of the object.

Figures 3A and 3B are internal block diagrams showing various examples of a driver assistance apparatus according to an embodiment of the present disclosure.

Referring to Figures 3A and 3B, the driver assistance apparatus 100 may signal-process stereo images received from the stereo camera 195 based on computer vision to generate vehicle-related information. Computer vision includes methods for acquiring, processing, analyzing, and understanding images and, in general, high-dimensional data from the real world in order to produce numerical or symbolic information, e.g., in the forms of decisions to duplicate the abilities of human vision by electronically perceiving and understanding an image. This image understanding can be seen as the disentangling of symbolic information from image data using models constructed with the aid of geometry, physics, statistics, and learning theory. The image data can take many forms, such as video sequences, views from multiple cameras, or multi-dimensional data. The vehicle-related information may include vehicle control information for direct control of the vehicle or driver assistance information for driving guidance provided to a driver.

Referring first to Figure 3A, the driver assistance apparatus 100 may include a communication unit 120, an interface unit 130, a memory 140, a processor 170, an electric power supply unit 190, and a stereo camera 195.

The communication unit 120 may exchange data with a mobile terminal 600 or a server 500 in a wireless fashion. In particular, the communication unit 120 may exchange data with a mobile terminal of the driver in a wireless fashion. To this end, various wireless data communication protocols, such as Bluetooth, Wi-Fi, Wi-Fi Direct, and APiX, may be used.

The communication unit 120 may receive weather information and road traffic state information, such as Transport Protocol Expert Group (TPEG) information, from the mobile terminal 600 or the server 500. On the other hand, the communication unit 120 may transmit real-time traffic information acquired by the driver assistance apparatus 100 based on stereo images to the mobile terminal 600 or the server 500.

When a user gets into the vehicle, a mobile terminal 600 of the user may pair with the driver assistance apparatus 100 automatically or by the user executing a pairing application.

The interface unit 130 may receive vehicle-related data or transmit a signal processed or generated by the processor 170 to the outside. To this end, the interface unit 130 may perform data communication with an electronic control unit (ECU) 770, an audio and video navigation (AVN) apparatus 400, and a sensor unit 760 in the vehicle in a wired communication fashion or a wireless communication fashion.

The interface unit 130 may receive map information related to vehicle travel through data communication with the AVN apparatus 400.

On the other hand, the interface unit 130 may receive sensor information from the ECU 770 and the sensor unit 760.

The sensor information may include at least one of vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, or in-vehicle humidity information.

The sensor information may be acquired by a heading sensor, a yaw sensor, a gyro sensor, a position module, a vehicle forward movement/backward movement sensor, a wheel sensor, a vehicle speed sensor, a vehicle body tilt sensor, a battery sensor, a fuel sensor, a tire sensor, a steering sensor, an in-vehicle temperature sensor, or an in-vehicle humidity sensor. The position module may include a global positioning system (GPS) module to receive GPS information.

Of the above-specified sensor information, the vehicle heading information, the vehicle position information, the vehicle angle information, the vehicle speed information, and the vehicle tilt information, which are related to vehicle travel, may be referred to as vehicle travel information.

The memory 140 may store various data related to overall operation of the driver assistance apparatus 100, such as programs for processing or control of the processor 170.

An audio interface unit (not shown) may convert an electric signal received from the processor 170 into an audio signal and outputs the audio signal. To this end, the audio output unit (not shown) may include a speaker. The audio interface unit (not shown) may output a sound corresponding to an operation of a user input unit (not shown), e.g., a button.

An audio input unit (not shown) may receive a user's voice. To this end, the audio input unit (not shown) may include a microphone. The received voice may be converted into an electric signal, which may be transmitted to the processor 170.

The processor 170 controls overall operation of each unit in the driver assistance apparatus 100.

In particular, the processor 170 performs signal processing based on computer vision. Consequently, the processor 170 may acquire stereo images for the view ahead of the vehicle from the stereo camera 195, calculate the disparity for the view ahead of the vehicle based on the stereo images, detect an object for at least one of the stereo images based on calculated disparity information, and continuously track motion of the object after detection of the object.

In particular, during detection of the object, the processor 170 may perform lane marker detection (LD), adjacent vehicle detection (VD), pedestrian detection (PD), bright spot detection (BD), traffic sign recognition (TSR), and road surface detection.

In addition, the processor 170 may calculate the distance to the detected adjacent vehicle, speed of the detected adjacent vehicle, and a difference in speed with the detected adjacent vehicle.

Meanwhile, the processor 170 may receive weather information and road traffic state information, such as TPEG information, through the communication unit 120.

On the other hand, the processor 170 may acquire, in real time, traffic-around-vehicle state information acquired by the driver assistance apparatus 100 based on stereo images.

Meanwhile, the processor 170 may receive map information from the AVN apparatus 400 through the interface unit 130.

On the other hand, the processor 170 may receive sensor information from the ECU 770 or the sensor unit 760 through the interface unit 130. The sensor information may include at least one of vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, and in-vehicle humidity information.

The electric power supply unit 190 may supply electric power to the respective components under control of the processor 170. In particular, electric power from an in-vehicle battery may be supplied to the electric power supply unit 190.

The stereo camera 195 may include a plurality of cameras. In the following description, it is assumed that the stereo camera 195 includes two cameras as previously described with reference to Figure 2.

The stereo camera 195 may be detachably attached to a ceiling or a front windshield glass of the vehicle 200. The stereo camera 195 may include a first camera 195a having a first lens 193a and a second camera 195b having a second lens 193b.

In addition, the stereo camera 195 may further include a first light shield unit 192a to shield light incident upon the first lens 193a and a second light shield unit 192b to shield light incident upon the second lens 193b.

Referring now to Figure 3B, the driver assistance apparatus 100 of Figure 3B may further include an input unit 110, a display unit 180, and an audio output unit 185 as compared with the driver assistance apparatus 100 of Figure 3A. Hereinafter, a description will be given of only user input unit 110, the display unit 180, and the audio output unit 185.

The user input unit 110 may include a plurality of buttons or a touchscreen attached to the driver assistance apparatus 100, specifically to the stereo camera 195. The driver assistance apparatus 100 may be powered on through the buttons or the touchscreen such that the driver assistance apparatus 100 is operated. In addition, various input operations may be performed through the input unit 110.

The audio output unit 185 outputs a sound based on an audio signal processed by the processor 170 to the outside. To this end, the audio output unit 185 may include at least one speaker.

The display unit 180 may display an image related to an operation of the driver assistance apparatus. In order to display such an image, the display unit 180 may include a cluster or a heads up display (HUD) provided at the inside front of the vehicle. In a case in which the display unit 180 is the HUD, the display unit 180 may include a projection module to project an image on the front windshield glass of the vehicle 200.

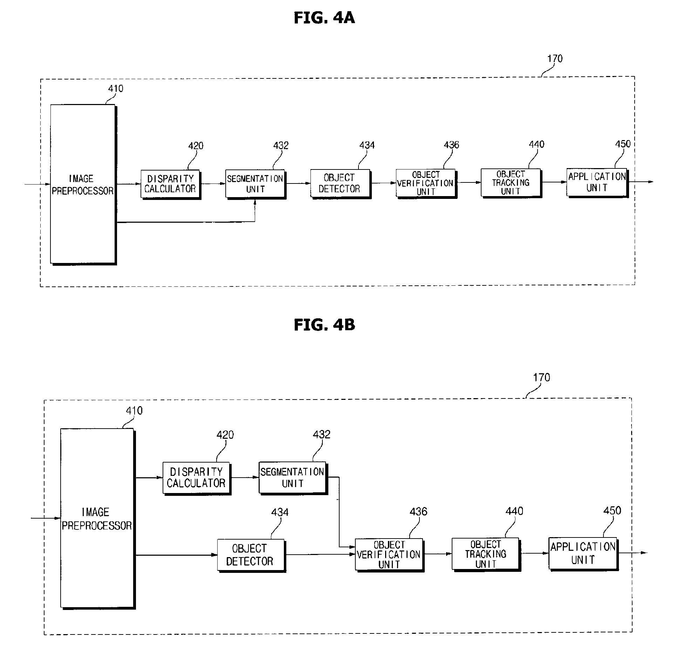

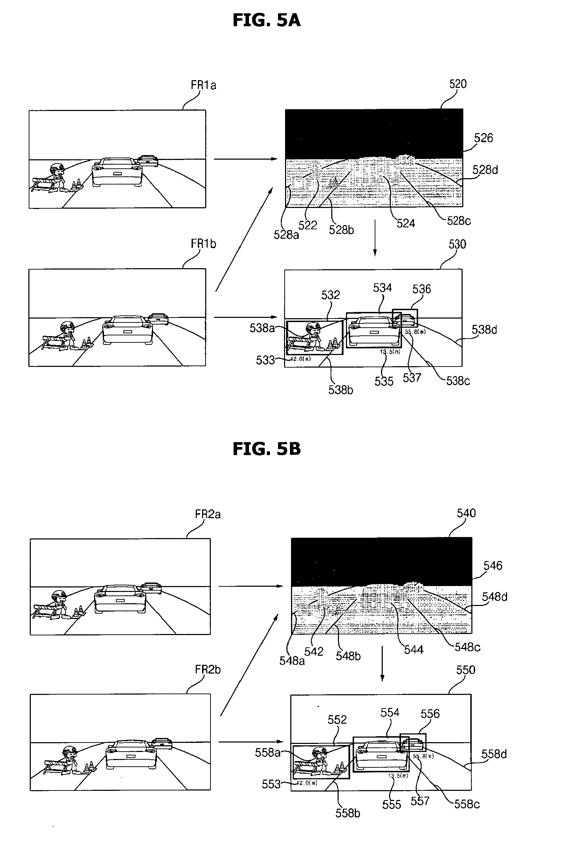

Figures 4A and 4B are internal block diagrams showing various examples of the processor shown in Figures 3A and 3B and Figures 5A and 5B are reference views illustrating operations of the processors shown in Figures 4A and 4B.

Referring first to Figure 4A, which is an internal block diagram showing an example of the processor 170, the processor 170 of the driver assistance apparatus 100 may include an image preprocessor 410, a disparity calculator 420, a segmentation unit 432, an object detector 434, an object verification unit 436, an object tracking unit 440, and an application unit 450.

The image preprocessor 410 receives stereo images from the stereo camera 195 and preprocesses the received stereo images.

Specifically, the image preprocessor 410 may perform noise reduction, rectification, calibration, color enhancement, color space conversion (CSC), interpolation, and camera gain control for the stereo images. As a result, the image preprocessor 410 may acquire stereo images more vivid than the stereo images photographed by the stereo camera 195.

The disparity calculator 420 may receive the stereo images signal-processed by the image preprocessor 410, perform stereo matching for the received stereo images, and acquire a disparity map based on the stereo matching. That is, the disparity calculator 420 may acquire disparity information of stereo images for a view ahead of the vehicle.

The stereo matching may be performed on a per pixel basis or a per predetermined block basis of the stereo images. Meanwhile, the disparity information may be included in a map showing binocular parallax information as values.

The segmentation unit 432 may perform segmentation and clustering for at least one of the stereo images based on the disparity information from the disparity calculator 420.

Specifically, the segmentation unit 432 may segment at least one of the stereo images into a background and a foreground based on the disparity information.

For example, a region having a predetermined value or less of the disparity information in the disparity map may be calculated as a background and the region may be excluded. As a result, a foreground may be relatively separated from the stereo image.

In another example, a region having a predetermined value or more of the disparity information in the disparity map may be calculated as a foreground and the region may be extracted. As a result, the foreground may be separated from the stereo image.

As described above, the stereo image is segmented into the background and the foreground based on the disparity information extracted based on the stereo image. Therefore, signal processing speed and signal processing amount may be reduced during detection of an object.

The object detector 434 may detect an object based on the image segment from the segmentation unit 432. That is, the object detector 434 may detect an object for at least one of the stereo images based on the disparity information. For example, the object detector 434 may detect an object from a foreground separated from the stereo image by the image segment. Subsequently, the object verification unit 436 classifies and verifies the separated object.

To this end, the object verification unit 436 may use a recognition method using a neural network, a support vector machine (SVM) method, a recognition method based on AdaBoost using a Haar-like feature, or a histograms of oriented gradients (HOG) method or another appropriate technique.

On the other hand, the object verification unit 436 may compare the detected object with objects stored in the memory 140 to verify the detected object.

For example, the object verification unit 436 may verify an adjacent vehicle, a lane marker, a road surface, a traffic sign, a dangerous zone, a tunnel, or the like located around the vehicle.

The object tracking unit 440 tracks the verified object. For example, the object tracking unit 440 may verify an object in stereo images which are sequentially acquired, calculate motion or a motion vector of the verified object, and track movement of the object based on the calculated motion or the calculated motion vector. Consequently, the object tracking unit 440 may track an adjacent vehicle, a lane marker, a road surface, a traffic sign, a dangerous zone, a tunnel, or the like located around the vehicle.

Subsequently, the application unit 450 may calculate a risk of the vehicle 200 based on various objects, such as adjacent vehicle, a lane marker, a road surface, and a traffic sign, located around the vehicle. In addition, the application unit 450 may calculate a possibility of a rear-end collision with a preceding vehicle, slip of the vehicle, or the like.

In addition, the application unit 450 may output a message informing a user of the following information as driver assistance information based on the calculated risk, the calculated possibility of the rear-end collision, or the calculated slip of the vehicle. Alternatively, the application unit 450 may generate a control signal for attitude control or travel control of the vehicle 200 as vehicle control information.

Figure 4B is an internal block diagram showing another example of the processor 170.

Referring to Figure 4B, the processor 170 of Figure 4B is substantially similar in construction to the processor 170 of Figure 4A except that a signal processing sequence of the processor 170 of Figure 4B is different from that of the processor 170 of Figure 4A. Hereinafter, a description will be given for only the differences between the processor 170 of Figure 4B and the processor 170 of Figure 4A.

The object detector 434 may receive stereo images and detect an object for at least one of the stereo images. Unlike Figure 4A, the object detector 434 may not detect an object for an image segmented based on disparity information but directly detect an object from a stereo image.

Subsequently, the object verification unit 436 may classify and verify the detected and separated object based on the image segment from the segmentation unit 432 and the object detected by the object detector 434.

To this end, the object verification unit 436 may use a recognition method using a neural network, an SVM method, a recognition method based on AdaBoost using a Haar-like feature, or a HOG method.

Figures 5A and 5B are reference views illustrating an operation of the processor 170 shown in Figure 4A based on stereo images acquired from first and second frame periods.

Referring first to Figure 5A, the stereo camera 195 acquires stereo images during the first frame period.

The disparity calculator 420 of the processor 170 receives stereo images FR1a and FR1b signal-processed by the image preprocessor 410 and performs stereo matching for the received stereo images FR1a and FR1b to acquire a disparity map 520.

The disparity map 520 shows a disparity between the stereo images FR1a and FR1b as levels. When a disparity level is high, the distance to the vehicle may be calculated as being short. When a disparity level is low, on the other hand, the distance to the vehicle may be calculated as being long.

Meanwhile, in a case in which the disparity map is displayed, the disparity map may be displayed with higher brightness when the disparity level is higher and the disparity map may be displayed with lower brightness when the disparity level is lower.

By way of example, Figure 5A shows that in the disparity map 520, first to fourth lane markers 528a, 528b, 528c, and 528d have their own disparity levels and a construction zone 522, a first preceding vehicle 524, and a second preceding vehicle 526 have their own disparity levels.

The segmentation unit 432, the object detector 434, and the object verification unit 436 respectively perform segmentation, object detection, and object verification for at least one of the stereo images FR1a or FR1b based on the disparity map 520.

Figure 5A shows, by way of example, that object detection and object verification for the second stereo image FR1b are performed using the disparity map 520. That is, object detection and object verification for first to fourth lane markers 538a, 538b, 538c, and 538d, a construction zone 532, a first preceding vehicle 534, and a second preceding vehicle 536 in an image 530 may be performed.

Referring now to Figure 5B, the stereo camera 195 acquires stereo images during the second frame period. The disparity calculator 420 of the processor 170 receives stereo images FR2a and FR2b signal-processed by the image preprocessor 410 and performs stereo matching for the received stereo images FR2a and FR2b to acquire a disparity map 540.

In the disparity map 540, first to fourth lane markers 548a, 548b, 548c, and 548d have their own disparity levels and a construction zone 542, a first preceding vehicle 544, and a second preceding vehicle 546 have their own disparity levels.

The segmentation unit 432, the object detector 434, and the object verification unit 436 respectively perform segmentation, object detection, and object verification for at least one of the stereo images FR2a and FR2b based on the disparity map 540. Object detection and object verification for the second stereo image FR2b are performed using the disparity map 540. That is, object detection and object verification for first to fourth lane markers 558a, 558b, 558c, and 558d, a construction zone 552, a first preceding vehicle 554, and a second preceding vehicle 556 in an image 550 may be performed.

Meanwhile, the object tracking unit 440 may track the objects verified based on comparison between Figures 5A and 5B. Specifically, the object tracking unit 440 may track movement of the objects verified in Figures 5A and 5B based on motion or motion vectors of the objects. Consequently, the object tracking unit 440 may track the lane markers, the construction zone, the first preceding vehicle, and the second preceding vehicle located around the vehicle.

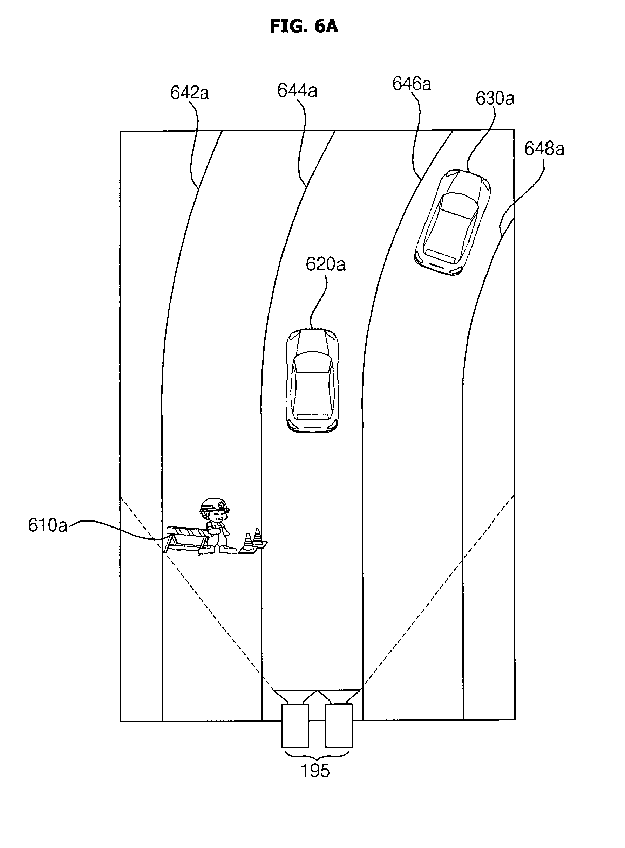

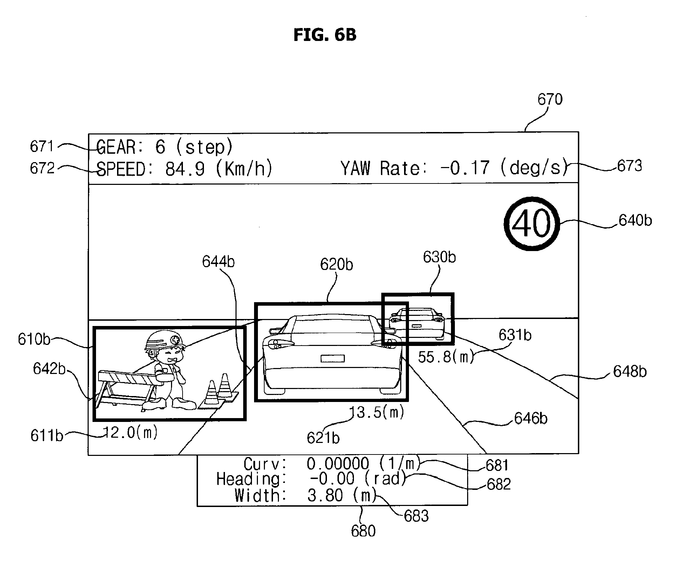

Figures 6A and 6B are reference views illustrating an operation of the driver assistance apparatus shown in Figure 3.

By way of example, Figure 6A shows a state ahead of the vehicle photographed by the stereo camera 195 provided in the vehicle. In particular, the state ahead of the vehicle may be displayed as a bird eye view. A first lane marker 642a, a second lane marker 644a, a third lane marker 646a, and a fourth lane marker 648a are arranged from the left side to the right side. A construction zone 610a is located between the first lane marker 642a and the second lane marker 644a. A first preceding vehicle 620a is located between the second lane marker 644a and the third lane marker 646a. A second preceding vehicle 630a is located between the third lane marker 646a and the fourth lane marker 648a.

By way of example, Figure 6B shows a state ahead of the vehicle acquired by the driver assistance apparatus together with various kinds of information. In particular, an image as shown in Figure 6B may be displayed on the display unit 180 of the driver assistance apparatus or on the AVN apparatus 400. Information is displayed based on images photographed by the stereo camera 195 unlike Figure 6A.

A first lane marker 642b, a second lane marker 644b, a third lane marker 646b, and a fourth lane marker 648b are arranged from the left side to the right side. A construction zone 610b is located between the first lane marker 642b and the second lane marker 644b. A first preceding vehicle 620b is located between the second lane marker 644b and the third lane marker 646b. A second preceding vehicle 630b is located between the third lane marker 646b and the fourth lane marker 648b.

The driver assistance apparatus 100 may perform signal processing based on stereo images photographed by the stereo camera 195 to verify objects for the construction zone 610b, the first preceding vehicle 620b, and the second preceding vehicle 630b. In addition, the driver assistance apparatus 100 may verify the first lane marker 642b, the second lane marker 644b, the third lane marker 646b, and the fourth lane marker 648b.

Meanwhile, Figure 6B shows, by way of example, that, in order to indicate that the objects for the construction zone 610b, the first preceding vehicle 620b, and the second preceding vehicle 630b have been verified, borders of the objects are highlighted.

On the other hand, the driver assistance apparatus 100 may calculate distance information for the construction zone 610b, the first preceding vehicle 620b, and the second preceding vehicle 630b based at least in part on stereo images photographed by the stereo camera 195.

The calculated first distance information 611b, calculated second distance information 621b, and calculated third distance information 631b respectively corresponding to the construction zone 610b, the first preceding vehicle 620b, and the second preceding vehicle 630b may be displayed.

Meanwhile, the driver assistance apparatus 100 may receive sensor information for the vehicle from the ECU 770 or the sensor unit 760. In particular, the driver assistance apparatus 100 may receive and display vehicle speed information, gear information, yaw rate information indicating speed at which a rotational angle (yaw angle) of the vehicle is changed, and vehicle angle information.

Figure 6B shows that vehicle speed information 672, gear information 671, and yaw rate information 673 may be displayed at a portion 670 above the image ahead of the vehicle and vehicle angle information 682 is displayed at a portion 680 under the image ahead of the vehicle. However, various examples may be further provided and fall within the scope of the present disclosure. In addition, vehicle width information 683 and road curvature information 681 may be displayed together with the vehicle angle information 682.

On the other hand, the driver assistance apparatus 100 may receive, for a road on which the vehicle is traveling, through the communication unit 120 or the interface unit 130. The speed limit information 640b may also be displayed.

The driver assistance apparatus 100 may display various kinds of information shown in Figure 6B through the display unit 180. Alternatively, the driver assistance apparatus 100 may store various kinds of information without additionally displaying the information. In addition, the driver assistance apparatus 100 may utilize the information in various applications.

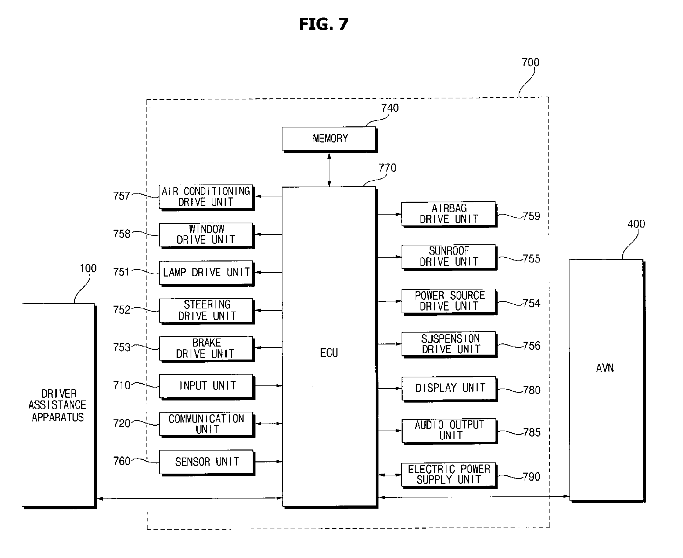

Figure 7 is an internal block diagram showing an example of an electronic control apparatus in the vehicle shown in Figure 1.

Referring to Figure 7, the vehicle 200 may include an electronic control apparatus 700 for vehicle control. The electronic control apparatus 700 may exchange data with the driver assistance apparatus 100 and the AVN apparatus 400.

The electronic control apparatus 700 may include a user input unit 710, a communication unit 720, a memory 740, a lamp drive unit 751, a steering drive unit 752, a brake drive unit 753, a power source drive unit 754, a sunroof drive unit 755, a suspension drive unit 756, an air conditioning drive unit 757, a window drive unit 758, an airbag drive unit 759, a sensor unit 760, an ECU 770, a display unit 780, an audio output unit 785, and an electric power supply unit 790.

The user input unit 710 may include a plurality of buttons or a touchscreen provided in the vehicle 200. Various input operations may be performed through the buttons or the touchscreen.

In one example, the communication unit 720 may exchange data with the mobile terminal 600 or the server 500 in a wireless fashion. In particular, the communication unit 720 may exchange data with a mobile terminal of the driver in a wireless fashion. To this end, various wireless data communication protocols, such as Bluetooth, Wi-Fi, Wi-Fi Direct, and APiX, may be used.

The communication unit 720 may receive weather information and road traffic state information, such as TPEG information, from the mobile terminal 600 or the server 500.

When a user gets into the vehicle, a mobile terminal 600 of the user may pair with the electronic control apparatus 700 automatically or by the user executing an application.

The memory 740 may store various data for overall operation of the electronic control apparatus 700, such as programs for processing or control of the ECU 770. The lamp drive unit 751 may control turn on/turn off of lamps provided inside and outside the vehicle. In addition, the lamp drive unit 751 may control intensity, direction, and the like of light emitted from each lamp. For example, the lamp drive unit 751 may control a direction indicating lamp, a brake lamp, and the like.

The steering drive unit 752 may electronically control a steering apparatus in the vehicle 200. Consequently, the steering drive unit 752 may change a heading of the vehicle.

The brake drive unit 753 may electronically control a brake apparatus in the vehicle 200. For example, the brake drive unit 753 may control an operation of a brake mounted at each wheel to reduce speed of the vehicle 200. In another example, the brake drive unit 753 may differently control operations of brakes mounted at left wheels and right wheels to adjust the heading of the vehicle 200 to the left or the right.

The power source drive unit 754 may electronically control a power source in the vehicle 200. For example, in a case in which the power source is an engine using fossil fuel, the power source drive unit 754 may electronically control the engine. Consequently, the power source drive unit 754 may control output torque of the engine.

In another example, in a case in which the power source is an electric motor the power source drive unit 754 may control the motor. Consequently, the power source drive unit 754 may control rotational speed and torque of the motor.

The sunroof drive unit 755 may electronically control a sunroof apparatus in the vehicle 200. For example, the sunroof drive unit 755 may control a sunroof to be opened or closed.

The suspension drive unit 756 may electronically control a suspension apparatus in the vehicle 200. For example, in a case in which a road surface is uneven, the suspension drive unit 756 may control the suspension apparatus to reduce vibration of the vehicle 200.

The air conditioning drive unit 757 may electronically control an air conditioner in the vehicle 200. For example, in a case in which the internal temperature of the vehicle is high, the air conditioning drive unit 757 may control the air conditioner to supply cool air into the vehicle.

The window drive unit 758 may electronically control a window apparatus in the vehicle 200. For example, the window drive unit 758 may control left and right side windows of the vehicle to be opened or closed.

The airbag drive unit 759 may electronically control an airbag apparatus in the vehicle 200. For example, the airbag drive unit 759 may control an airbag to deploy in a dangerous situation.

The sensor unit 760 senses a signal related to travel of the vehicle 200. To this end, the sensor unit 760 may include a heading sensor, a yaw sensor, a gyro sensor, a position module, a vehicle forward movement/backward movement sensor, a wheel sensor, a vehicle speed sensor, a vehicle body tilt sensor, a battery sensor, a fuel sensor, a tire sensor, a steering sensor, an in-vehicle temperature sensor, an in-vehicle humidity sensor, or another appropriate type of sensor.

Consequently, the sensor unit 760 may acquire a sensing signal for vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, in-vehicle humidity information, and the like.

In addition, the sensor unit 760 may further include an engine speed sensor, an air flow sensor (AFS), an intake air temperature sensor (ATS), a water temperature sensor (WTS), a throttle position sensor (TPS), a top dead center (TDC) sensor, and a crank angle sensor (CAS). The ECU 770 may control overall operation of each unit in the electronic control apparatus 700. The ECU 770 may perform a specific operation based on an input through the input unit 710, receive and transmit a signal sensed by the sensor unit 760 to the driver assistance apparatus 100, receive map information from the AVN apparatus 400, or control operations of the respective drive units 751, 752, 753, 754, and 756.

In addition, the ECU 770 may receive weather information and road traffic state information, such as TPEG information, from the communication unit 720. The display unit 780 may display an image related to an operation of the driver assistance apparatus. In order to display such an image, the display unit 780 may include a cluster or a HUD provided at the inside front of the vehicle. In a case in which the display unit 180 is the HUD, the display unit 180 may include a projection module to project an image on the front windshield glass of the vehicle 200. Meanwhile, the display unit 780 may include a touchscreen to allow user input by tapping on the screen.

The audio output unit 785 converts an electric signal received from the ECU 770 into an audio signal and outputs the audio signal. To this end, the audio output unit 785 may include a speaker. The audio output unit 785 may output a sound corresponding to an operation of the input unit 710, e.g., a button.

The electric power supply unit 790 may supply electric power to the respective components under control of the ECU 770. In particular, electric power from an in-vehicle battery may be supplied to the electric power supply unit 790.

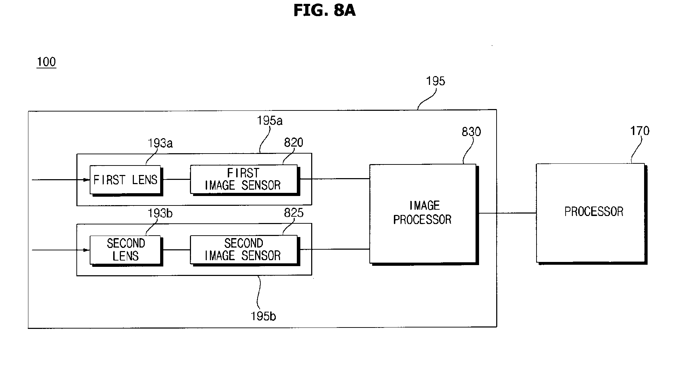

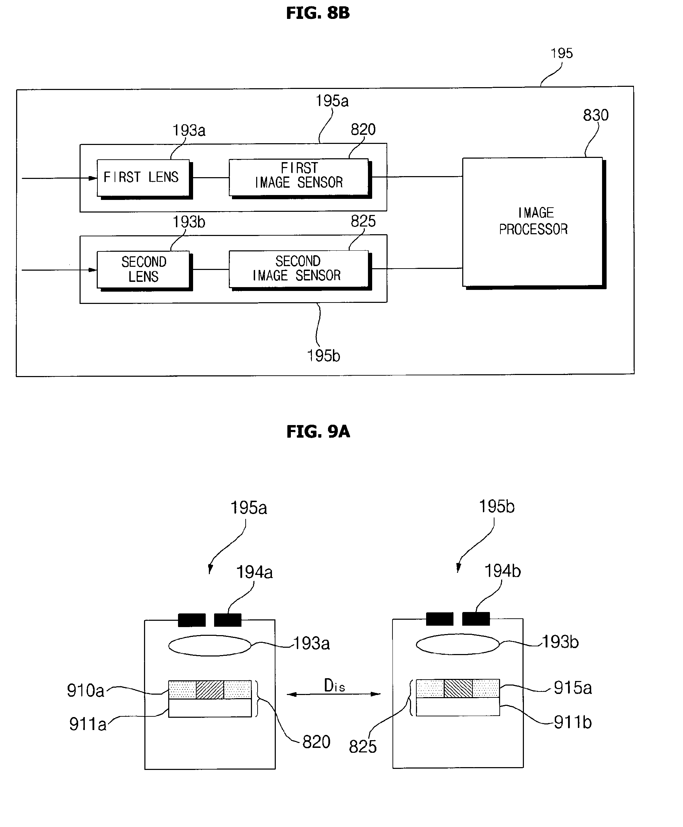

Hereinafter, the internal structure of the stereo camera 195 to photograph an image ahead of the vehicle as previously described with reference to Figure 2 will be described in detail with reference to Figures 8A and 8B.

Referring first to Figure 8A, the stereo camera 195 may include a first camera 195a, a second camera 195b, and an image processor 830.

Meanwhile, the driver assistance apparatus 100 (see Figure 3) may include a processor 170 in addition to the image processor 830 as shown in Figure 8A.

The first camera 195a may include a first lens 193a and a first image sensor 820. The second camera 195b may include a second lens 193b and a second image sensor 825.

The first lens 193a and the second lens 193b may be spaced apart from each other by a distance of about 200 mm to 400 mm.

In accordance with the embodiment of the present disclosure, the first image sensor 820 may sense an image corresponding to at least one exposure time and the second image sensor 825 may sense images corresponding to a plurality of exposure times.

Meanwhile, the image processor 830 may generate a disparity map and an RGB image based on the images acquired by the first and second image sensors 820 and 825. The generated RGB image may be an RGB image based on a high dynamic range (HDR) image.

Particularly, in accordance with the embodiment of the present disclosure, the exposure time of the image acquired by the first image sensor 820 may be different from the exposure times of the images acquired by the second image sensor 825.

The image processor 830 may generate a disparity map and an RGB image based on images, corresponding to different exposure times, from the first and second image sensors 820 and 825.

Specifically, in connection with acquisition of an RGB image, the image processor 830 may generate an RGB image based on the images, corresponding to different exposure times, from the first and second image sensors 820 and 825. In addition, in connection with acquisition of a disparity map, the image processor 830 may signal-process the images corresponding to different exposure times such that the images have the same exposure time and generate a disparity map based on the images having the same exposure time.

Consequently, the image processor 830 may acquire a disparity map and an RGB image with reduced sensitivity loss and artifacts.

As an example of signal processing performed such that the images have the same exposure time, on the other hand, the image processor 830 may generate a first combined image from the image acquired by the first image sensor 820 and may generate a second combined image from the images acquired by the second image sensor 825. Subsequently, the image processor 830 may generate a disparity map based on the first and second combined images.

Meanwhile, the exposure times of the first and second image sensors 820 and 825 may be adjusted based on an electric signal.

For example, during a first frame period, the first image sensor 820 may output a first image having an exposure time corresponding to the first frame period. During the first frame period, on the other hand, the second image sensor 825 may output a second image having an exposure time corresponding to a portion of the first frame period and a third image having an exposure time corresponding to another portion of the first frame period.

In particular, the second image sensor 825 may output a second image and a third image having different exposure times according to an ON or OFF state of an electric signal.

On the other hand, the image processor 830 may set the exposure times of the first and second image sensors 820 and 825 and may control the first and second image sensors 820 and 825 to be operated based on the set exposure times.

Meanwhile, in order to adjust the exposure times of the first and second image sensors 820 and 825, the stereo camera 195 may further include a first aperture 194a (see Figure 9A) to adjust the amount of light falling incident upon the first lens 193a and a second aperture 194b (*see* Figure 9A) to adjust the amount of light falling incident upon the second lens 193b. Consequently, the stereo camera 195 may acquire images having different exposure times according to an opening and closing of the first and second apertures 194a and 194b (see Figure 9A), which will hereinafter be described with reference to Figure 9A.

On the other hand, the image processor 830 may control the exposure times of images acquired by the first and second image sensors 820 and 825 during a first frame and the exposure times of images acquired by the first and second image sensors 820 and 825 during a second frame to be different from one another. That is, the image processor 830 may control the exposure times of the first and second image sensors 820 and 825 to be changed on a per frame basis.

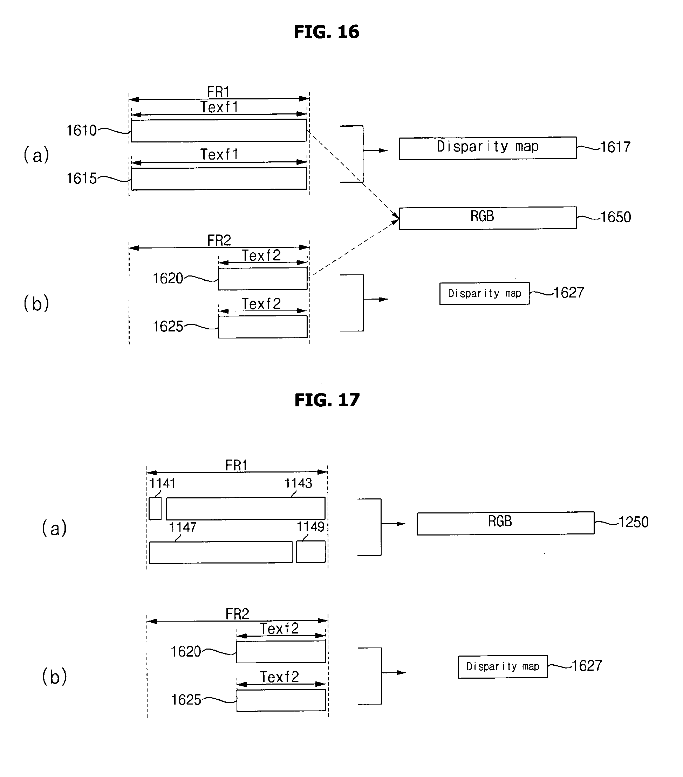

For example, the image processor 830 may acquire an RGB image based on the images, having different exposure times, acquired by the first and second image sensors 820 and 825 and generate a disparity map based on the images, having the same exposure time, acquired by the first and second image sensors 820 and 825 during a second frame, which will hereinafter be described in more detail with reference to Figures 16 and 17.

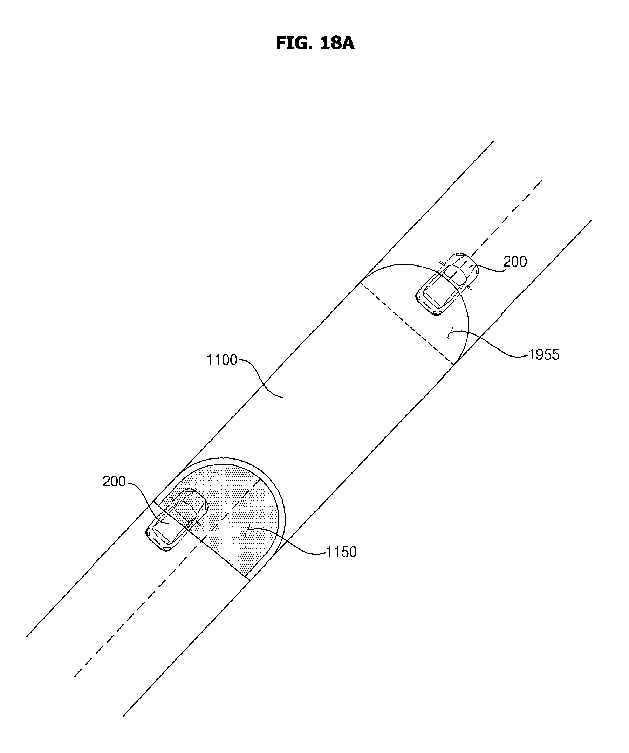

On the other hand, the image processor 830 may control the exposure time of at least one of the first and second image sensors 820 and 825 to be increased when the vehicle goes into a tunnel and may control the exposure time of at least one of the first and second image sensors 820 and 825 to be decreased when the vehicle comes out of the tunnel, which will hereinafter be described in more detail with reference to Figures 18A to 18C.

Meanwhile, the processor 170 of the driver assistance apparatus 100 (see Figure 3) may receive a disparity map and an RGB image generated by the image processor 830 of the stereo camera 195 and may perform signal processing based thereupon.

For example, the processor 170 may detect an object for an RGB image ahead of the vehicle based on the disparity map and the RGB image and continuously track the motion of the object after detection of the object. In addition, the processor 170 may calculate the distance to an adjacent vehicle, speed of the detected adjacent vehicle, and a difference in speed with the detected adjacent vehicle.

Alternatively, the processor 170 may generate and output a control signal for attitude control or travel control of the vehicle 200 based on the calculated speed of the adjacent vehicle and the calculated distance to the adjacent vehicle. For example, the processor 170 may generate a control signal to control at least one selected from among the steering drive unit 752, the brake drive unit 753, the power source drive unit 754, and the suspension drive unit 756 in the vehicle.

Alternatively, the image processor 830 may further detect an object for an RGB image ahead of the vehicle based on the disparity map and the RGB image in addition to creation of the disparity map and the RGB image and continuously track motion of the object after detection of the object. In addition, the image processor 830 may calculate the distance to an adjacent vehicle, the speed of the detected adjacent vehicle, and a difference in the speed with the detected adjacent vehicle.

At this time, the processor 170 may receive information regarding the distance to the adjacent vehicle, information regarding the speed of the detected adjacent vehicle, and information regarding the difference in speed with the detected adjacent vehicle from the image processor 830 and may generate a control signal to control at least one of the steering drive unit 752, the brake drive unit 753, the power source drive unit 754, and the suspension drive unit 756 in the vehicle based thereupon.

Alternatively, the image processor 830 may generate a disparity map and an RGB image; detect an object; track the motion of the object; calculate the distance to an adjacent vehicle, the speed of the detected adjacent vehicle, and a difference in speed with the detected adjacent vehicle; and generate a control signal to control at least one of the steering drive unit 752, the brake drive unit 753, the power source drive unit 754, and the suspension drive unit 756 in the vehicle.

That is, as shown in Figure 8B, the stereo camera 195 may include a first camera 195a, a second camera 195b, and an image processor 830. At this time, the driver assistance apparatus 100 (see Figure 3) may not include a processor 170 as shown in Figure 8A. That is, the image processor 830 of the stereo camera 195 may perform all functions of the processor 170. In this case, the stereo camera 195 of Figure 8B may be identical to the driver assistance apparatus 100 (see Figure 3) as described above.

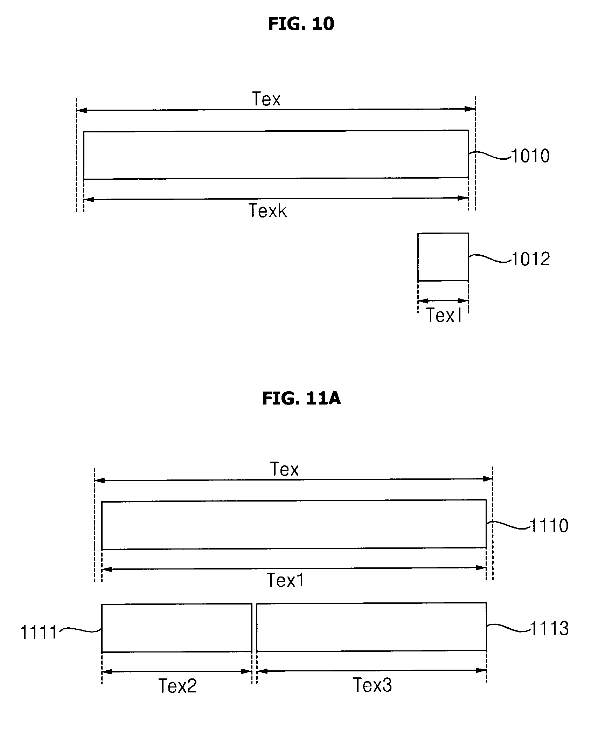

Figures 9A to 9D and 10 are reference views illustrating an operation of the stereo camera shown in Figure 8A or 8B.

Figure 9A shows an example of a first camera 195a and a second camera 195b in a stereo camera 900a. The first camera 195a may include a first aperture 194a, a first lens 193a, and a first image sensor 820. The second camera 195b may include a second aperture 194b, a second lens 193b, and a second image sensor 825. The first aperture 194a may adjust the amount of light incident upon the first lens 193a. The second aperture 194b may adjust the amount of light incident upon the second lens 193b. In order to sense RGB colors, the first image sensor 820 may include an RGB filter 910a and a sensor array 911a to convert an optical signal into an electric signal. To sense RGB colors, the second image sensor 825 may include an RGB filter 915a and a sensor array 911b to convert an optical signal into an electric signal. In this way, the first image sensor 820 and the second image sensor 825 may sense and output RGB images.

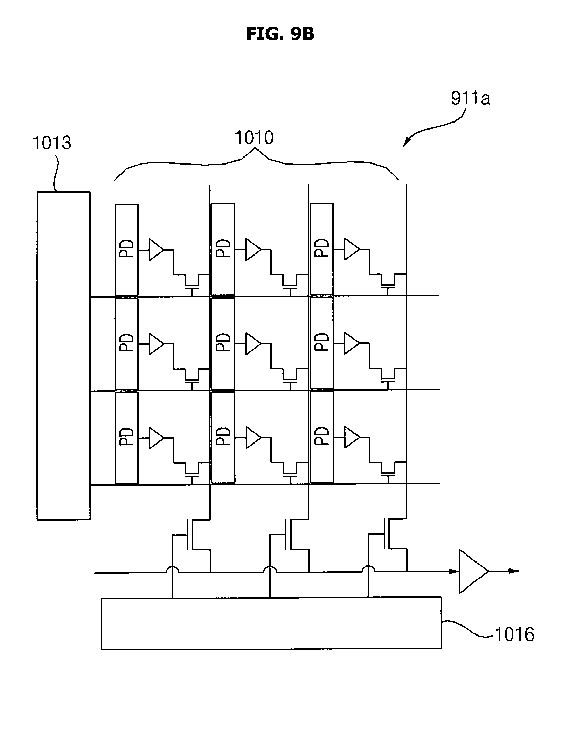

Figure 9B is a schematic circuit diagram of the first sensor array 911a shown in Figure 9A.

Referring to Figure 9B, the first sensor array 911a may include a pixel circuit unit 1010, a row decoder 1013, and a column decoder 1016. Each pixel in the pixel circuit unit 1010 may include a photodiode to detect light and circuit elements to transmit the signal detected by the photodiode to rows and columns. An electric signal sensed by each pixel may be output to the outside through the row decoder 1013 and the column decoder 1016.

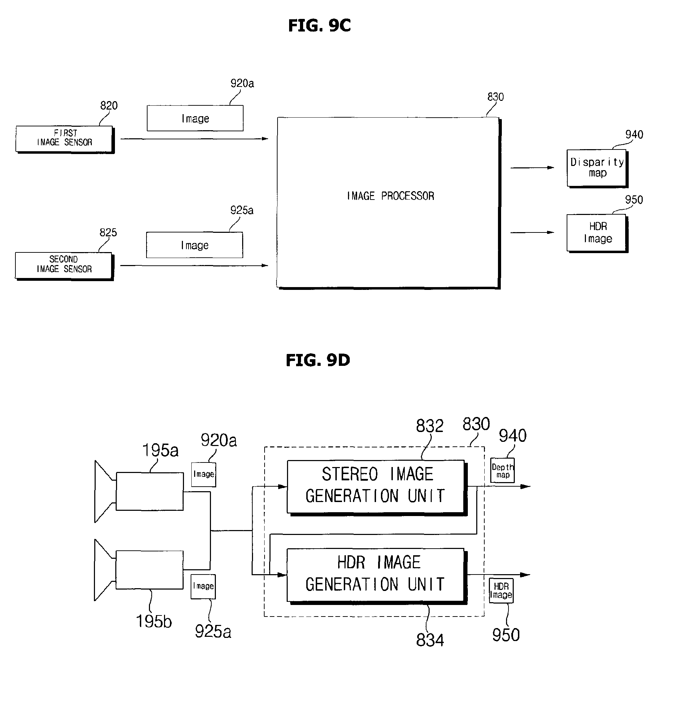

Figure 9C is a reference view illustrating an operation of the image processor 830 based on a first image 920a and a second image 925a respectively sensed by the first image sensor 820 and the second image sensor 825. The first image 920a sensed by the first image sensor 820 may be an image based on RGB colors and the second image 925a sensed by the second image sensor 825 may also be an image based on RGB colors.

In accordance with the embodiment of the present disclosure, the first image sensor 820 may sense an image corresponding to at least one exposure time. The second image sensor 825 may sense images corresponding to a plurality of exposure times.

The image processor 830 may generate a disparity map 940 and an RGB image 950 based on the images acquired by the first and second image sensors 820 and 825. The generated RGB image 950 may be an RGB image based on a high dynamic range (HDR) image. The exposure time of the image acquired by the first image sensor 820 may be different from the exposure times of the images acquired by the second image sensor 825, as described in detail below.

The image processor 830 may generate a disparity map 940 and an RGB image 950 based on the images, corresponding to different exposure times, acquired from the first and second image sensors 820 and 825. Consequently, the image processor 830 may acquire a disparity map 940 and an RGB image 950 with reduced sensitivity loss and artifacts.

Figure 9D is an internal block diagram showing an example of the image processor.

The image processor 830 may further include a stereo image generation unit 832 to generate a disparity map 940 and an HDR image generation unit 834 to generate an RGB image 950.

Specifically, the stereo image generation unit 832 may acquire the disparity between the images 920a and 925a from the first and second image sensors 820 and 825 and generate a disparity map based on the disparity. In particular, the stereo image generation unit 832 may acquire the disparity in brightness between the images 920a and 925a and generate a disparity map based on the disparity in brightness.

In particular, the stereo image generation unit 832 may signal-process images having different exposure times such that the images have the same exposure time and generate a disparity map based on the image having the same exposure time.

That is, the stereo image generation unit 832 may generate a first combined image from the image acquired by the first image sensor 820 and may generate a second combined image from the images acquired by the second image sensor 825. In addition, the stereo image generation unit 832 may generate a disparity map based on the generated first and second combined images. The first combined image and the second combined image may be images corresponding to the same first frame period.

The HDR image generation unit 834 may generate an RGB image based on images having different exposure times. Specifically, the HDR image generation unit 834 may extract partial regions from images corresponding to the respective exposure times and combine the extracted partial regions to generate a new RGB image. In particular, the HDR image generation unit 834 may extract brightness regions corresponding to the respective exposure times and combine the extracted brightness regions to generate a new RGB image. Consequently, the HDR image generation unit 834 may generate an RGB image based on an HDR image. That is, the HDR image generation unit 834 may acquire an HDR image having adjustable contrast and dynamic range.

Meanwhile, Figure 10 shows, by way of example, that a first image 1010 is sensed by the first image sensor 820 and a second image 1012 is sensed by the second image sensor 825. For example, Figure 10 shows that the first image 1010 has an exposure time Texk and the second image 1012 has an exposure time Texl, which is much shorter than the exposure time Texk of the first image 1010.

In this case, the difference between the exposure times is large with the result that at least one of the first and second images 1010 and 1012 may have a saturated portion or a dark portion, i.e., an inadequately photographed portion. Thus, when a disparity map based on brightness is generated, the quality of the images may be extremely deteriorated.

In order to solve the above problem, the present disclosure uses a method shown in Figures 11A to 18C.

Figures 11A to 18C are reference views illustrating an operation of the image processor shown in Figure 8A or 8B.

Figure 11A shows, by way of example, an image 1110 acquired by the first image sensor 820 and images 1111 and 1113 acquired by the second image sensor 825 during a first frame period Tex.

Referring to Figure 11A, it can be seen that an exposure time Tex1 of the image 1110, an exposure time Tex2 of the image 1111, and an exposure time Tex3 of the image 1113 are different from one another. For example, the exposure time Tex2 of the image 1111 may be 0.4 x Tex1 and the exposure time Tex3 of the image 1113 may be 0.6 x Tex1.

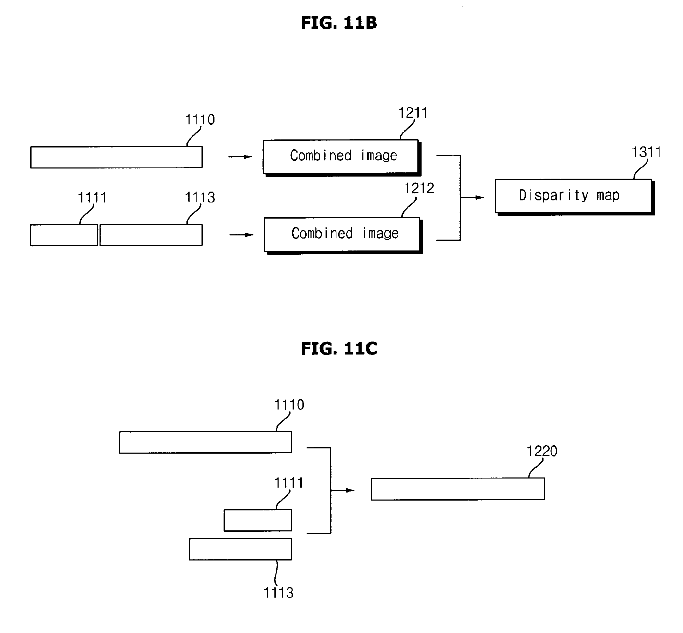

Figure 11B shows, by way of example, that a disparity map 1311 is generated based on the images shown in Figures 11A.

The image processor 830 may combine the images 1111 and 1113 acquired by the second image sensor 825 during the first frame period Tex. Then, the image processor 830 may generate a second combined image 1212.

Alternatively, the image processor 830 may generate a first combined image 1211 from the image 1110. Meanwhile, the first combined image 1211 and the second combined image 1212 have almost similar exposure times. Consequently, the first combined image 1211 and the second combined image 1212 may be RGB images having similar brightness levels.

In addition, the image processor 830 may generate a disparity map 1311 with reduced sensitivity loss and artifacts using the generated first and second combined images 1211 and 1212. The generated disparity map 1311 may be used in creating an RGB image 1220.

Figure 11C shows, by way of example, that an RGB image 1220 is generated based on the images shown in Figures 11A.

The image processor 830 may generate an RGB image based on the HDR from the images 1110, 1111, and 1113 having different exposure times.

For example, a bright region of the image 1110, which has the longest exposure time, may constitute a main portion of the image 1110 and, as a result, a dark region of the image 1110 may be blurred. In contrast, a dark region of the image 1111, which has the shortest exposure time, may constitute a main portion of the image 1111 and, as a result, a bright region of the image 1111 may be blurred.

The image processor 830 may, thus, extract a bright region from the image 1110, having the longest exposure time, a dark region from the image 1111, having the shortest exposure time, and an intermediate region from the image 1113, having the intermediate exposure time to generate a vivid RGB image based on HDR using the extracted bright, dark, and intermediate regions.

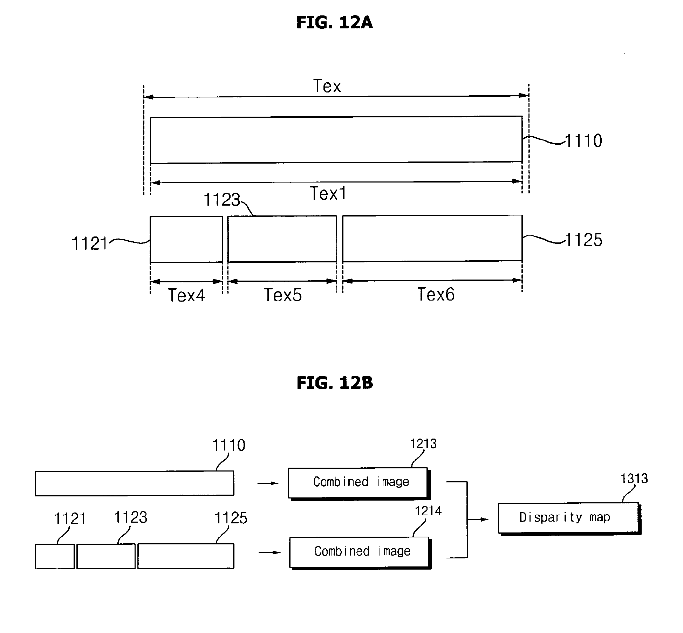

Figures 12A to 12C show, by way of example, that a disparity map and an RGB image are generated based on one image 1110 from the first image sensor 820 and three images 1121, 1123, and 1125, corresponding to different exposure times, from the second image sensor 825 during a first frame period similarly to that shown in Figures 11A to 11C.

Figure 12A shows an image 1110 acquired by the first image sensor 820 and images 1121, 1123, and 1125 acquired by the second image sensor 825 during a first frame period Tex. Referring to Figure 12A, It can be seen that an exposure time Tex1 of the image 1110, an exposure time Tex4 of the image 1121, an exposure time Tex5 of the image 1123, and an exposure time Tex6 of the image 1125 are different from one another. For example, the exposure time Tex4 of the image 1121 may be 0.2 x Tex1, the exposure time Tex5 of the image 1123 may be 0.3 x Tex1, and the exposure time Tex6 of the image 1125 may be 0.5 x Tex1.

Figure 12B shows that a disparity map 1313 is generated based on the images shown in Figures 12A.

The image processor 830 may combine the images 1121, 1123, and 1125 acquired by the second image sensor 825 during the first frame period Tex. Consequently, the image processor 830 may generate a second combined image 1214.

Alternately, the image processor 830 may generate a first combined image 1213 from the image 1110. Meanwhile, the first combined image 1213 and the second combined image 1214 have almost similar exposure times. Consequently, the first combined image 1213 and the second combined image 1214 may be RGB images having similar brightness levels.

In addition, the image processor 830 may generate a disparity map 1313 with reduced sensitivity loss and artifacts using the generated first and second combined images 1213 and 1214.

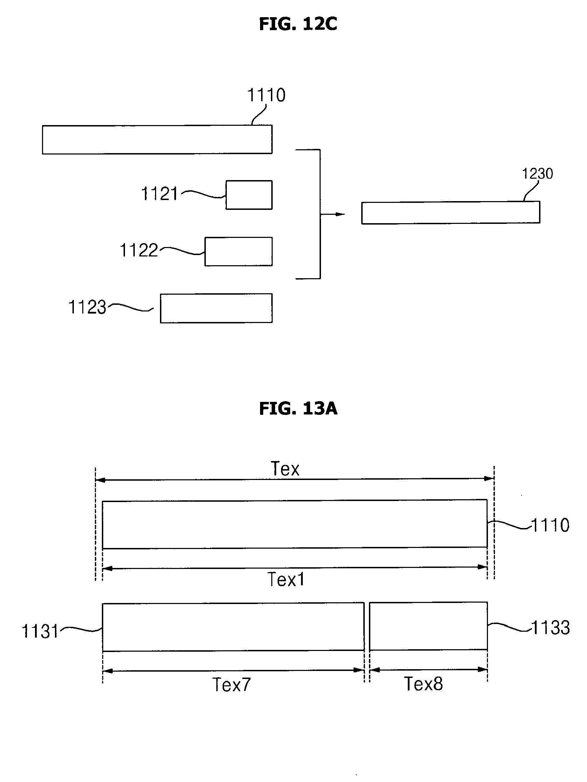

Figure 12C shows that an RGB image 1230 is generated based on the images shown in Figures 12A.

The image processor 830 may generate an RGB image based on the HDR from the images 1110, 1121, 1123, and 1125 having different exposure times.

The image processor 830 may extract a bright region from the image 1110, having the longest exposure time, and a dark region from the image 1121, having the shortest exposure time. As a result, the image processor 830 may generate a vivid (or intensely colorful) RGB image based on HDR.

Figures 13A to 13C show, by way of example, that a disparity map and an RGB image are generated based on one image 1110 from the first image sensor 820 and two images 1131 and 1133, corresponding to different exposure times, from the second image sensor 825 during a first frame period similarly to Figures 11A to 11C.

In particular, Figure 13A shows an image 1110 acquired by the first image sensor 820 and images 1131 and 1133 acquired by the second image sensor 825 during a first frame period Tex.

Referring to Figure 13A, it can be seen that an exposure time Tex1 of the image 1110, an exposure time Tex7 of the image 1131, and an exposure time Tex8 of the image 1133 are different from one another. For example, the exposure time Tex7 of the image 1131 may be 0.7 x Tex1, and the exposure time Tex8 of the image 1133 may be 0.3 x Tex1.

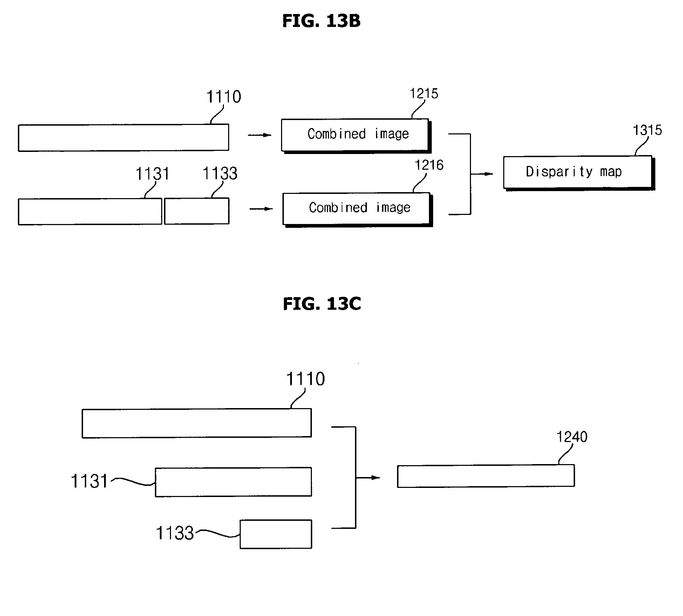

The image processor 830 may generate a disparity map 1315 and an RGB image 1240 based on the images 1110, 1131, and 1133 as shown in Figures 13B and 13C. In particular, a first combined image 1215 and a second combined image 1216 may be generated when the disparity map 1315 is generated.

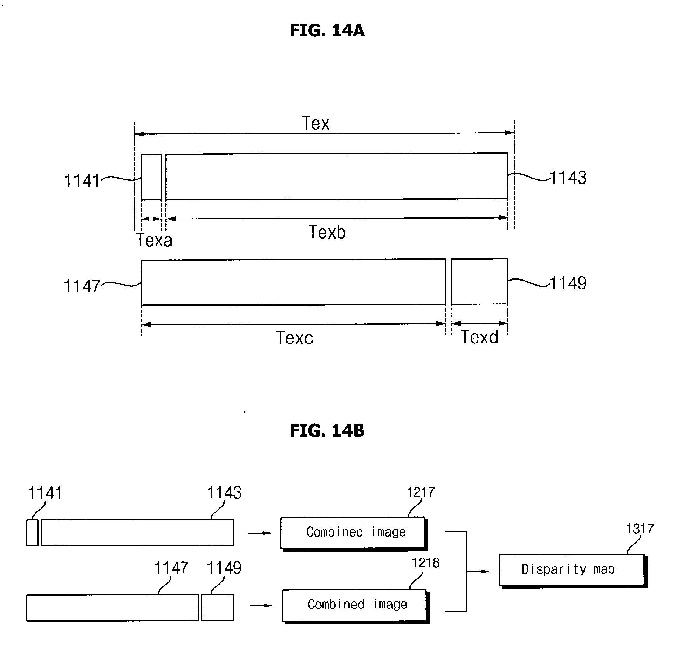

Figures 14A to 14C show, by way of example, that a plurality of images is sensed by the first image sensor 820 during a first frame period unlike Figures 11A to 11C.

Figure 14A shows image 1141 and 1143 acquired by the first image sensor 820 and images 1147 and 1149 acquired by the second image sensor 825 during a first frame period Tex.

Referring to Figure 14A, it can be seen that an exposure time Texa of the image 1141, an exposure time Texb of the image 1143, an exposure time Texc of the image 1147, and an exposure time Texd of the image 1149 are different from one another.

For example, the exposure time Texa of the image 1141 may be 0.1 x Tex1, the exposure time Texb of the image 1143 may be 0.9 x Tex1, the exposure time Texc of the image 1147 may be 0.8 x Tex1, and the exposure time Texd of the image 1149 may be 0.2 x Tex1.

Figure 14B shows that a disparity map 1317 is generated based on the images shown in Figures 14A.

The image processor 830 may combine the images 1141 and 1143 acquired by the first image sensor 820 and combine the images 1147 and 1149 acquired by the second image sensor 825 during the first frame period Tex.

Consequently, the image processor 830 may generate a first combined image 1217 and a second combined image 1218. The first combined image 1217 and the second combined image 1218 may have almost similar exposure times. Consequently, the first combined image 1217 and the second combined image 1218 may be RGB images having similar brightness levels.

In addition, the image processor 830 may generate a disparity map 1317 with reduced sensitivity loss and artifacts using the generated first and second combined images 1217 and 1218.

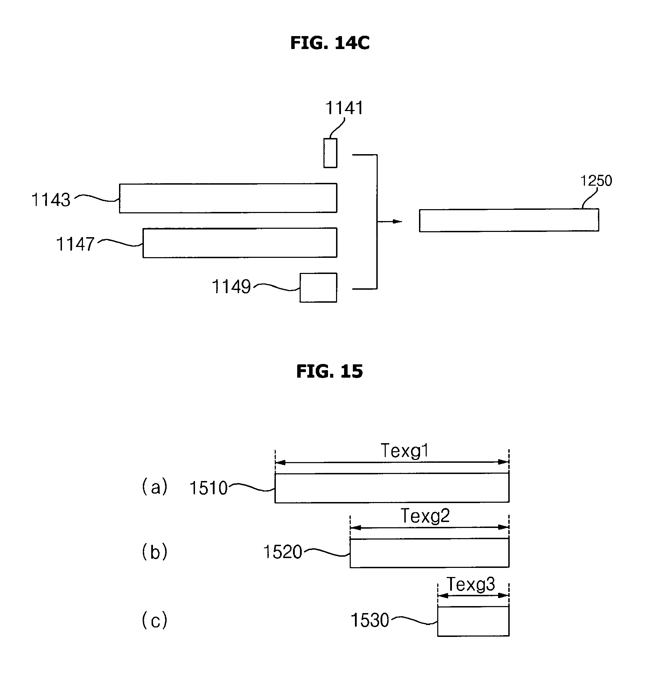

Figure 14C shows that an RGB image 1250 is generated based on the images shown in Figures 14A.

The image processor 830 may generate an RGB image based on HDR from the images 1141, 1143, 1147, and 1149 having different exposure times. That is, the image processor 830 may acquire an HDR image having adjustable contrast and dynamic range.

The image processor 830 may extract a bright region from the image 1143, having the longest exposure time, a dark region from the image 1141, having the shortest exposure time, and intermediate regions from the images 1147 and 1149, having the intermediate exposure times, and may generate a vivid RGB image 1250 based on an HDR using the extracted bright region, dark region, and intermediate regions.

Alternatively, the processor 170 of Figure 8A or the image processor 830 of Figure 8B may detect an object based on the disparity map and the RGB image as previously described.

In particular, during detection of the object, the processor 170 of Figure 8A or the image processor 830 of Figure 8B may perform lane marker detection (LD), adjacent vehicle detection (VD), pedestrian detection (PD), bright spot detection (BD), traffic sign recognition (TSR), and road surface detection.

Alternatively, the processor 170 of Figure 8A or the image processor 830 of Figure 8B may adjust the exposure times of the first and second image sensors 820 and 825 based on kind of the detected object.

Specifically, in a case in which at least one of an adjacent vehicle, a pedestrian, and a lane marker is detected, the processor 170 of Figure 8A or the image processor 830 of Figure 8B may control the exposure time of at least one of the first and second image sensors 820 and 825 to be a first exposure time.

In a case in which a bright spot is detected, the processor 170 of Figure 8A or the image processor 830 of Figure 8B may control the exposure time of at least one of the first and second image sensors 820 and 825 to be a second exposure time which is shorter than the first exposure time.

In a case in which a traffic sign is detected, the processor 170 of Figure 8A or the image processor 830 of Figure 8B may control the exposure time of at least one of the first and second image sensors 820 and 825 to be a third exposure time which is shorter than the second exposure time.

Typically, when the exposure time is short, a photographed image is not blurred and a bright region of the image is not saturated. However, the photographed image may have a high noise level and it is difficult to detect an edge from a dark region of the image.

When the exposure time is long, on the other hand, the photographed image has a low noise level and it is easy to detect an edge from a dark region of the image. However, a moving object will often be blurred and a bright region of the image is saturated.

Using the above-mentioned exposure time characteristics, it is possible to set the exposure time based on the kind of the detected object.

Figures 15 (a), (b), and (c) is a reference view illustrating the setting of an exposure time per object.

By way of example, Figure 15(a) shows an image 1510 acquired at a first exposure time Texg1, Figure 15(b) shows an image 1520 acquired at a second exposure time Texg2, and Figure 15(c) shows an image 1530 acquired at a third exposure time Texg3.

Specifically, during the detection of an object, the processor 170 of Figure 8A or the image processor 830 of Figure 8B may set the first exposure time Texg1, which is the longest exposure time, for an adjacent vehicle, a pedestrian, or a lane marker, which can be detected at a long distance ahead of the vehicle and has relatively low motion blur. In particular, the processor 170 of Figure 8A or the image processor 830 of Figure 8B may control the exposure time of at least one of the first and second image sensors 820 and 825 to be the first exposure time Texg1. In this case, it is possible to cope with low luminance.

In addition, during detection of an object, the processor 170 of Figure 8A or the image processor 830 of Figure 8B may set the third exposure time Texg3, which is the shortest exposure time, for a traffic sign, which can be detected only at a short distance ahead of the vehicle and has relatively high motion blur. In particular, the processor 170 of Figure 8A or the image processor 830 of Figure 8B may control the exposure time of at least one of the first and second image sensors 820 and 825 to be the third exposure time Texg3. In this case, it is possible to minimize image deterioration due to the motion blur.

In addition, during detection of an object during a night travel, the processor 170 of Figure 8A or the image processor 830 of Figure 8B may set the second exposure time Texg2, which is between the first exposure time and the third exposure time, for a bright spot, such as that corresponding to a bright portion in a dark region, such that the bright portion is not saturated. In particular, the processor 170 of Figure 8A or the image processor 830 of Figure 8B may control the exposure time of at least one of the first and second image sensors 820 and 825 to be the second exposure time Texg2. In this case, the detected bright spot is not saturated.

The processor 170 of Figure 8A or the image processor 830 of Figure 8B may acquire a disparity map and an RGB image based on the set exposure time and detect an object based on the disparity map and the RGB image. In this case, it is possible to easily detect the object since the exposure time is properly set per object.

Figures 16 and 17 show, by way of example, that exposure times of the first and second image sensors 820 and 825 are changed on a per frame basis.

Figure 16(a) shows, by way of example, that, during a first frame period FR1, an image 1610 may be acquired by the first image sensor 820 and an image 1615 may be acquired by the second image sensor 825 having an exposure time Tex1.

Alternatively, Figure 16(b) shows, by way of example, that, during a second frame period FR2, an image 1620 acquired by the first image sensor 820 and an image 1625 acquired by the second image sensor 825 may have an exposure time Tex2, which is shorter than the exposure time Tex1 during the first frame period FR1.

The image processor 830 may acquire an RGB image based on the images, having different exposure times, acquired by the first and second image sensors 820 and 825 and generate a disparity map based on the images, having the same exposure time, acquired by the first and second image sensors 820 and 825 during the second frame.

As shown in Figure 16, the image processor 830 may generate a vivid RGB image 1650 using the image 1610 acquired by the first image sensor 820 during the first frame period FR1 and the image 1620 acquired by the first image sensor 820 during the second frame period FR2.

Alternatively, unlike Figure 16, the image processor 830 may generate a vivid RGB image using the image 1615 acquired by the second image sensor 825 during the first frame period FR1 and the image 1625 acquired by the second image sensor 825 during the second frame period FR2.

On the other hand, the image processor 830 may generate a disparity map 1617 using the images 1610 and 1615 acquired during the first frame period FR1. In addition, the image processor 830 may generate a disparity map 1627 using the images 1620 and 1625 acquired during the second frame period FR2.

It is also possible to acquire images having different exposure times during the first frame period FR1 and to acquire images having the same exposure time during the second frame period FR2.

Figure 17(a) shows, by way of example, images 1141 and 1143 acquired by the first image sensor 820 and images 1147 and 1149 acquired by the second image sensor 825 during a first frame period FR1. Referring to Figure 17(a), it can be seen that the images 1141, 1143, 1147, and 1149 have different exposure times. For example, the exposure time of the image 1141 may be 0.1 x Tex1, the exposure time of the image 1143 may be 0.9 x Tex1, the exposure time of the image 1147 may be 0.8 x Tex1, and the exposure time of the image 1149 may be 0.2 x Tex1.

Meanwhile, Figure 17(b) may be substantially the same as Figure 16(b).

In this case, the image processor 830 may generate a vivid RGB image 1250 based on the images 1141, 1143, 1147, and 1149, having different exposure times, acquired during the first frame period FR1.

In addition, the image processor 830 may generate a disparity map 1627 using the images 1620 and 1625, having the same exposure time, acquired during the second frame period FR2.

The image processor 830 may control the exposure time of at least one of the first and second image sensors 820 and 825 to be increased when the vehicle goes into a tunnel and may control the exposure time of at least one of the first and second image sensors 820 and 825 to be decreased when the vehicle comes out of the tunnel.

Figure 18A shows, by way of example, a case in which the vehicle 200 goes into a tunnel 1100 and also a case in which the vehicle 200 comes out of the tunnel 1100. In the case in which the vehicle 200 travels in the daytime, an entrance 1150 of the tunnel 1100 is typically darker than the other portions of the road and an exit 1955 of the tunnel 1100 is typically brighter than the interior of the tunnel 1100.

In order to acquire a more vivid image, the image processor 830 may control the exposure time of at least one of the first and second image sensors 820 and 825 to be increased when the vehicle enters the tunnel in the daytime and may control the exposure time of at least one of the first and second image sensors 820 and 825 to be decreased when the vehicle exits the tunnel in the daytime.

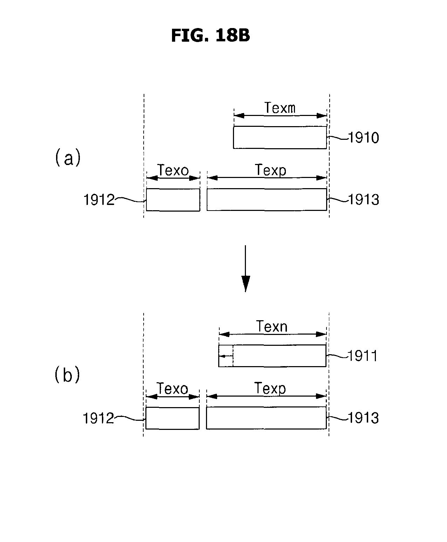

Figures 18B (a) and (b) shows, by way of example, that an image 1910 having an exposure time Texm is acquired by the first image sensor 820 and an image 1912 having an exposure time Texo and an image 1913 having an exposure time Texp are acquired by the second image sensor 825 and that the exposure time of the first image sensor 820 is increased as the vehicle goes into the tunnel and, therefore, an image 1911 having an exposure time Texn longer than the exposure time Texm is acquired by the first image sensor 820. In this case, the exposure time Texm, the exposure time Texo, and the exposure time Texp may be different from one another. Alternately, the exposure time of the second image sensor 825 may be changed.

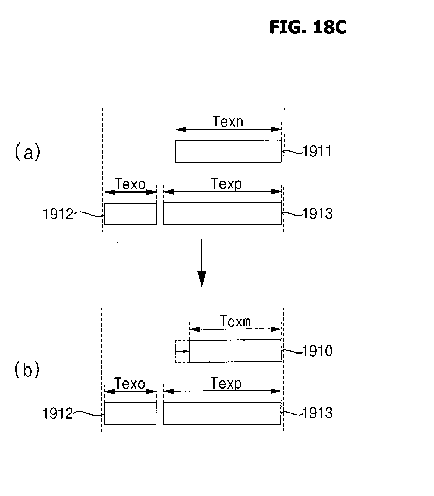

Figures 18C (a) and (b), which is opposite to Figure 18B, shows, by way of example, that an image 1911 having an exposure time Texn is acquired by the first image sensor 820 and that the exposure time of the first image sensor 820 is decreased as the vehicle exits the tunnel and, therefore, an image 1910 having an exposure time Texm shorter than the exposure time Texn is acquired by the first image sensor 820.

Meanwhile, as shown in Figures 18B or 18C, the image processor 830 may generate a vivid RGB image and a disparity map, as described above, using the images, even though the exposure times of which have been changed.

In a case in which the vehicle 200 travels in the nighttime, on the other hand, the exposure time may be decreased when the vehicle goes into the tunnel as shown in Figure 18C and the exposure time may be increased when the vehicle comes out of the tunnel as shown in Figure 18B.

The operation method of the stereo camera and the vehicle according to the present disclosure may be implemented as code that can be written on a processor-readable recording medium and thus read by a processor provided in the stereo camera or the vehicle. The processor-readable recording medium may be any type of recording device in which data is stored in a processor-readable manner. The processor-readable recording medium may include, for example, a read only memory (ROM), a random access memory (RAM), a compact disc read only memory (CD-ROM), a magnetic tape, a floppy disc, and an optical data storage device and may be implemented in the form of a carrier wave transmitted over the Internet. The processor-readable recording medium can be distributed over a plurality of computer systems connected to a network such that processor-readable code is written thereto and executed therefrom in a decentralized manner.

As is apparent from the above description, a stereo camera and a driver assistance apparatus and a vehicle including the same according to an embodiment of the present disclosure each include a first image sensor to sense an image corresponding to at least one exposure time, a second image sensor to sense images corresponding to a plurality of exposure times, and a processor to generate a disparity map and an RGB image based on the images acquired by the first and second image sensors. Consequently, it is possible for the stereo camera and the driver assistance apparatus and the vehicle including the same to simply generate a disparity map and an RGB image.

In particular, it is possible to acquire a disparity map and a vivid RGB image with reduced sensitivity loss and artifacts using images, corresponding to different exposure times, acquired by the first image sensor and the second image sensor. In particular, it is possible to acquire an HDR image having adjustable contrast and dynamic range.

Any reference in this specification to "one embodiment," "an embodiment," "example embodiment," etc., means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A stereo camera (195) comprising:
a first image sensor (820) to sense an image having at least one exposure time;
a second image sensor (825) to sense images having a plurality of different exposure times; and
a processor (830 or 170) to generate a disparity map and an RGB image based on the images acquired by the first and second image sensors.

2. The stereo camera according to claim 1, wherein
the first image sensor (820) senses images having a plurality of exposure times, and
the exposure times of the images acquired by the first image sensor are different from the exposure times of the images acquired by the second image sensor.

3. The stereo camera according to one of preceding claims, wherein the processor (830 or 170) acquires the RGB image based on the images acquired by the first and second image sensors, the images having different exposure times.

4. The stereo camera according to one of preceding claims, wherein the processor (830 or 170) signal-processes the image acquired by the first image sensor (820) and the images acquired by the second image sensor such that the image acquired by the first image sensor and the images acquired by the second image sensor (825) have a same exposure time and generates the disparity map based on the images having the same exposure time.

5. The stereo camera according to claim 4, wherein the processor (830 or 170) generates a first combined image from the image acquired by the first image sensor and a second combined image from the images acquired by the second image sensor and generates the disparity map based on the first and second combined images.

6. The stereo camera according to one of preceding claims, wherein the processor (830 or 170) controls exposure times of the images acquired by the first and second image sensors during a first frame of a plurality of frames to be different than exposure times of images acquired by the first and second image sensors during a second frame.

7. The stereo camera according to claim 6, wherein the processor (830 or 170):
acquires the RGB image based on the images acquired by the first and second image sensors during the first frame, the images acquired during the first frame having different exposure times; and
generates the disparity map based on the images acquired by the first and second image sensors during the second frame, the images acquired during the second frame having a same exposure time.

8. The stereo camera according to one of preceding claims, wherein the processor (830 or 170) generates a control signal to control at least one of a steering drive unit, a brake drive unit, a power source drive unit, and a suspension drive unit in a vehicle based on the disparity map and the RGB image.

9. The stereo camera according to one of preceding claims, wherein the processor (830 or 170) detects at least one of an adjacent vehicle, a pedestrian, a lane marker, a bright spot, and a traffic sign based on the disparity map and the RGB image.

10. The stereo camera according to claim 9, wherein the processor (830 or 170):
controls the exposure time of at least one of the first and second image sensors to be a first exposure time in which at least one of the adjacent vehicle, the pedestrian, and the lane marker is detected;
controls the exposure time of at least one of the first and second image sensors to be a second exposure time shorter than the first exposure if the bright spot is detected; and
controls the exposure time of at least one of the first and second image sensors to be a third exposure time shorter than the second exposure if the traffic sign is detected.

11. The stereo camera according to one of preceding claims, wherein the processor (830 or 170):
controls the exposure time of at least one of the first and second image sensors to be increased when a vehicle enters a tunnel; and
controls the exposure time of at least one of the first and second image sensors to be decreased when the vehicle exits the tunnel.

12. The stereo camera according to one of preceding claims, further comprising:
a first lens (193a) disposed in front of the first image sensor;
a first aperture (194a) to adjust the amount of light falling incident upon the first lens;
a second lens (193b) disposed in front of the second image sensor; and
a second aperture (194b) to adjust the amount of light falling incident upon the second lens, wherein
the first and second image sensors (820,825) acquire images having different exposure times according to operation of the first aperture and the second aperture.

13. A vehicle (200) comprising:
a sensor unit to (760) sense a state of the vehicle;
a steering drive unit (752) to drive a steering apparatus;
a brake drive unit (753) to drive a brake apparatus;
a power source drive unit (754) to drive a power source;
a suspension drive unit (756) to drive a suspension apparatus;
a first image sensor (820) to sense an image having at least one exposure time;
a second image sensor (825) to sense images having a plurality of exposure times;
a processor (830 or 170) to generate a disparity map and an RGB image based on the images acquired by the first and second image sensors; and
a controller (770) to generate a control signal to control at least one of the steering drive unit, the brake drive unit, the power source drive unit, and the suspension drive unit in the vehicle based on the disparity map and the RGB image.

14. The vehicle according to claim 13, wherein
the first image sensor (820) senses images corresponding to a plurality of exposure times, and
the exposure times of the images acquired by the first image sensor is different from the images acquired by the second image.

15. The vehicle according to one of preceding claims 13 and 14, wherein the processor (830 or 170) operates as any one of claims 3 to 11.
